# DEMANDE DE BREVET EUROPEEN

(11) **EP 1 125 821 A1**
(43) Date de publication de la demande: **22.08.2001**
(21) Numéro de dépôt: 01400366.9
(22) Date de dépôt: 12.02.2001
(51) Int. Cl.: B62D 1/18

(54) **Ensemble de colonne de direction réglable en position notamment de véhicule automobile**

(30) Priorité: 18.02.2000 FR 0002054
(71) Demandeur: Faurecia Industries, 92100 Boulogne-Billancourt (FR)
(72) Inventeur: Paris, Claude, 25420 Voujeaucaut (FR); Marche, Stéphane, 25150 Pont de Roide (FR)
(74) Mandataire: Habasque, Etienne Joel Jean-François

(57) **Abrégé**

Cet ensemble comportant une structure de fixation (2) munie de flasques (6) entre lesquels s'étend un corps de colonne (3) dans lequel est disposé un arbre, et un tirant (8) relié au corps (3), dont une extrémité est associée à des moyens (5) de blocage de l'ensemble par serrage des flasques autour du corps, déplaçables entre des positions de verrouillage pour bloquer le corps et de déverrouillage pour permettre son réglage, ces moyens de blocage (5) comportant des moyens (9) d'immobilisation de sécurité du tirant (8) par rapport à la structure (2), comprenant deux pièces d'appui (10,11) en regard l'une à l'autre et entre lesquelles sont prévus des moyens élastiques d'écartement (12), est caractérisé en ce que les pièces d'appui (10,11) comprennent des moyens d'accrochage complémentaires de maintien de celles-ci dans une position prédéterminée l'une par rapport à l'autre, en vue du montage de l'ensemble de colonne et en ce que ces moyens d'accrochage sont débrayables après le montage de l'ensemble.

## Description

La présente invention concerne un ensemble de colonne de direction réglable en position notamment de véhicule automobile.

Plus particulièrement, l'invention se rapporte à un tel ensemble qui comporte une structure de fixation munie de flasques entre lesquels s'étend un corps de colonne de direction dans lequel est disposé un arbre de direction.

De façon générale également, le corps de colonne comporte une pièce de montage s'étendant entre les flasques de la structure de fixation, cette pièce de montage étant reliée à un tirant qui s'étend également entre les flasques et dont une première extrémité est associée à des moyens d'appui sur l'un des flasques et dont une seconde extrémité est associée à des moyens de blocage de l'ensemble de colonne par serrage des flasques autour du corps de colonne.

Ces moyens de blocage sont déplaçables par exemple par un utilisateur entre une position de verrouillage pour bloquer le corps de colonne et une position de déverrouillage pour permettre son réglage.

Différents problèmes liés au maintien en position de l'ensemble de colonne notamment lors d'un choc, ont amené les constructeurs de ce type de matériels à intégrer dans les moyens de blocage, des moyens d'immobilisation de sécurité du tirant et donc du corps de colonne par rapport à la structure de fixation.

Ces moyens comprennent généralement deux pièces d'appui disposées en regard l'une de l'autre et entre lesquelles sont prévues des moyens élastiques d'écartement, l'une des pièces étant reliée au flasque correspondant de la structure de fixation et l'autre étant portée par le tirant.

Les surfaces en regard de ces pièces comprennent alors des parties en saillie et en creux complémentaires formées par exemple par des crans ou autres, déplaçables entre une position d'engrènement lorsque les moyens de blocage de l'ensemble de colonne sont en position de verrouillage et une position escamotée permettant le déplacement de ces pièces l'une par rapport à l'autre, lorsque les moyens de blocage sont en position déverrouillée, pour permettre le réglage en position du corps de colonne.

Cependant, ces structures présentent un certain nombre d'inconvénients, notamment de montage de l'ensemble de colonne et en particulier de ces pièces d'appui.

En effet, le montage de ces pièces est relativement délicat et long dans la mesure où l'opérateur de montage doit les maintenir dans une position correcte d'alignement lorsqu'il assure le montage du tirant, pour éviter tout risque de dégradation des parties en saillie et en creux complémentaires de ces plaques.

En effet, si celles-ci ne sont pas correctement alignées les unes par rapport aux autres lors du montage du tirant, elles peuvent venir s'écraser les unes contre les autres.

Le but de l'invention est donc de résoudre ces problèmes.

A cet effet, l'invention a pour objet un ensemble de colonne de direction réglable en position notamment de véhicule automobile, du type comportant une structure de fixation munie de flasques entre lesquels s'étend un corps de colonne de direction dans lequel est disposé un arbre de direction, et un tirant relié au corps de colonne, dont une extrémité est associée à des moyens d'appui sur l'un des flasques de la structure et l'autre à des moyens de blocage de l'ensemble de colonne par serrage des flasques autour du corps de colonne, déplaçables entre une position de verrouillage pour bloquer le corps de colonne et une position de déverrouillage pour permettre son réglage, ces moyens de blocage comportant des moyens d'immobilisation de sécurité du tirant par rapport à la structure de fixation, comprenant deux pièces d'appui en regard l'une à l'autre, entre lesquelles sont prévus des moyens élastiques d'écartement, et dont l'une est reliée au flasque correspondant de la structure de fixation et dont l'autre est portée par le tirant, les surfaces en regard de ces pièces comprenant des parties en saillie et en creux complémentaires déplaçables entre une position d'engrènement lorsque les moyens de blocage sont en position de verrouillage et une position escamotée permettant le déplacement de ces pièces l'une par rapport à l'autre lorsque les moyens de blocage sont en position-déverrouillée, caractérisé en ce que les pièces d'appui comprennent des moyens d'accrochage complémentaires de maintien de celles-ci dans une position prédéterminée l'une par rapport à l'autre, en vue du montage de l'ensemble de colonne et en ce que ces moyens d'accrochage sont débrayables après le montage de cet ensemble.

L'invention sera mieux comprise à la lecture de la description qui va suivre, donnée uniquement à titre d'exemple et faite en se référant aux dessins annexés, sur lesquels :
- la Fig.1 représente une vue schématique de côté d'un ensemble de colonne de direction;
- la Fig.2 représente une vue schématique partiellement en coupe de moyens de blocage entrant dans la constitution de cet ensemble ; et
- les Figs.3 et 4 représentent des vues en perspective éclatée de gauche et de droite de pièces d'appui et de moyens élastiques d'écartement entrant dans la constitution de tels moyens de blocage.

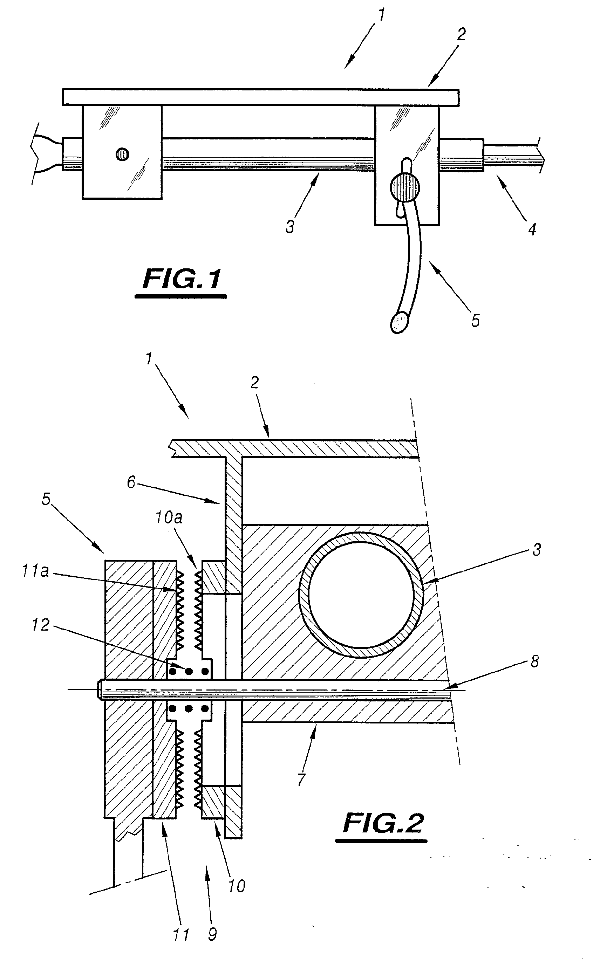

On a en effet représenté sur la figure 1, un ensemble de colonne de direction réglable en position notamment de véhicule automobile.

Cet ensemble est désigné par la référence générale 1 et comporte une structure de fixation désignée par la référence générale 2, munie de flasques entre lesquels s'étend un corps de colonne de direction désigné par la référence générale 3, de façon classique.

Un arbre de direction est disposé dans ce corps de colonne, cet arbre de direction étant désigné par la référence générale 4.

De façon classique également, cet arbre de direction est monté rotatif dans le corps de colonne et l'une des extrémités de celui-ci est adaptée pour recevoir un volant de direction, tandis que l'autre extrémité de celui-ci, est adaptée pour être reliée au reste du mécanisme de direction du véhicule.

Un tel ensemble comporte également des moyens 5 de blocage de ce corps de colonne en position, ces moyens de blocage étant par exemple déplaçables par un utilisateur entre une position de verrouillage pour bloquer l'ensemble de colonne en position, par serrage des flasques autour du corps de colonne, et une position de déverrouillage pour permettre le réglage en position de l'ensemble de colonne.

On a représenté plus en détail ces moyens de blocage sur la figure 2, où l'on reconnaît la structure de fixation 2 de l'ensemble de colonne 1, le corps de colonne 3 et les moyens de blocage 5.

L'un des flasques, désigné par la référence générale 6, de la structure de fixation est également représenté.

Le corps de colonne 3 est associé à une pièce de montage désignée par la référence générale 7, qui s'étend entre les flasques de la structure de fixation, cette pièce de montage étant par exemple reliée à un tirant désigné par la référence générale 8, qui s'étend également entre les flasques et dont l'une des extrémités, non représentée sur cette figure 2, est associée à des moyens d'appui sur l'autre flasque de la structure de fixation.

L'extrémité du tirant 8 représentée sur cette figure 2, est associée aux moyens de blocage 5.

Ces moyens de blocage comprennent également des moyens d'immobilisation de sécurité du tirant par rapport à la structure de fixation, ces moyens d'immobilisation de sécurité étant désignés par la référence générale 9.

En fait, ces moyens d'immobilisation peuvent par exemple comporter deux plaques d'appui en regard l'une de l'autre, désignées par les références 10 et 11 sur cette figure 2, entre lesquelles sont prévus des moyens élastiques d'écartement, désignés par la référence générale 12, formés par exemple par un ressort ou autre.

L'une des pièces d'appui, telle que par exemple la pièce d'appui 10, est reliée au flasque correspondant 6 de la structure de support 2, tandis que l'autre pièce d'appui, par exemple 11, est portée par le tirant 8, celui-ci s'étendant par exemple dans un trou de cette pièce.

Les surfaces en regard de ces pièces d'appui 10 et 11 comprennent des parties en saillie et en creux complémentaires, formées par exemple par des crans ou autres et désignées par les références générales 10a et 11a sur cette figure 2, qui sont déplaçables entre une position d'engrènement lorsque les moyens de blocage 5 sont en position de verrouillage et une position escamotée, telle que celle représentée sur cette figure 2, permettant le déplacement de ces pièces l'une par rapport à l'autre, lorsque les moyens de blocage sont en position déverrouillée.

Dans cette position, le réglage en position du corps de colonne et donc de l'ensemble de colonne est possible.

Pour résoudre les problèmes mentionnés précédemment à propos du montage de ces pièces d'appui, celles-ci comprennent des moyens d'accrochage complémentaires de maintien de ces pièces dans une position prédéterminée l'une par rapport à l'autre, en vue du montage de l'ensemble de colonne, ces moyens d'accrochage étant débrayables après le montage de cet ensemble.

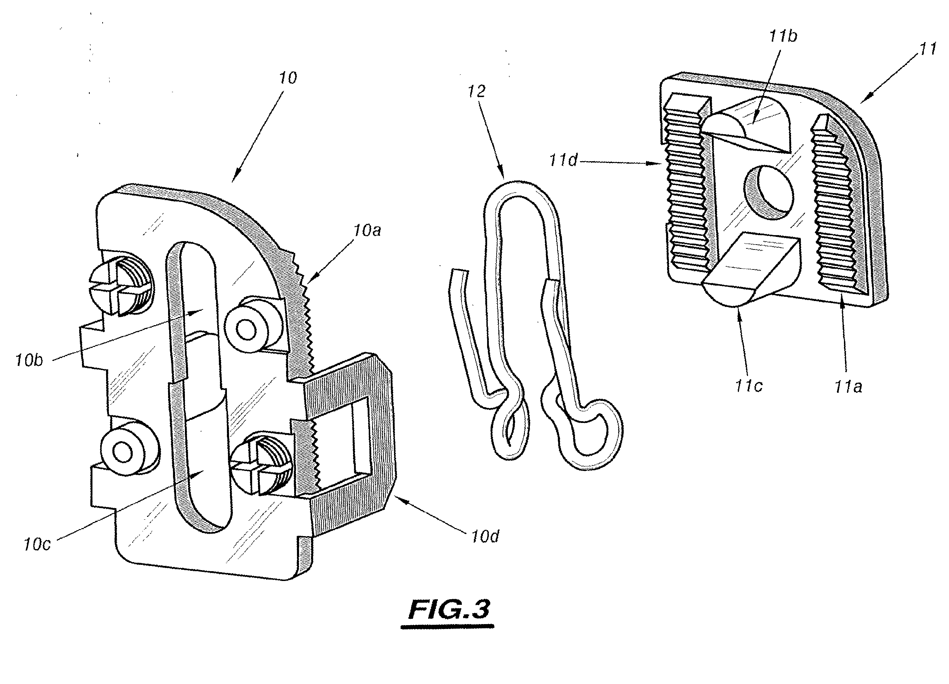

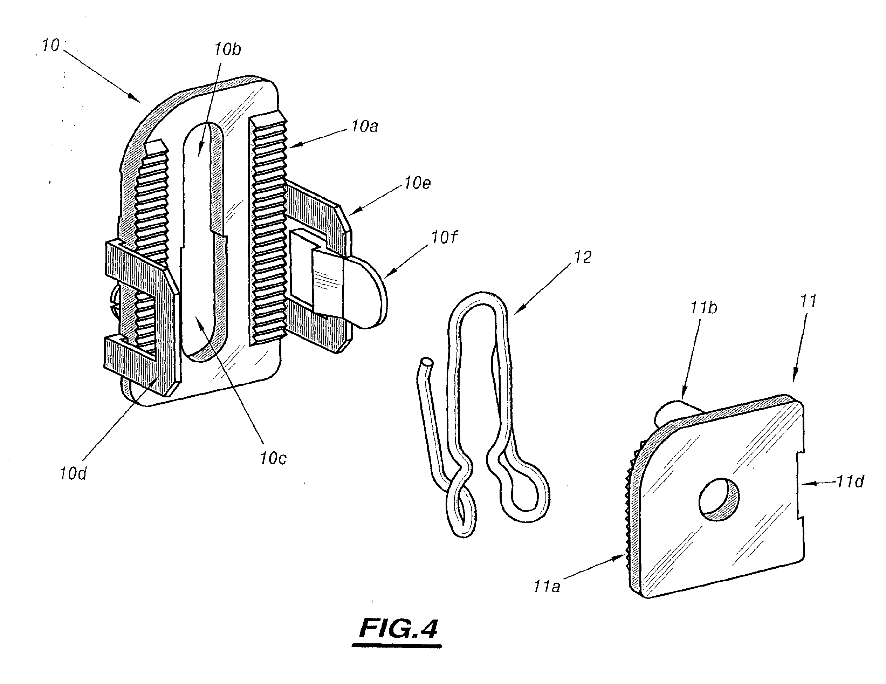

On a représenté sur les figures 3 et 4, un exemple de réalisation de ces pièces.

On reconnaît en effet sur ces figures 3 et 4, les pièces d'appui désignées par les références 10 et 11 et un organe élastique d'écartement 12 qui se présente par exemple sous la forme d'une épingle élastique interposée entre ces pièces.

Comme cela a été mentionné précédemment, les surfaces en regard de ces pièces d'appui comprennent des parties en saillie et en creux 10a,11a formées par exemple par des crans.

Dans l'exemple de réalisation représenté, chaque pièce comporte deux rangées de crans complémentaires.

Ces pièces comportent également des moyens d'accrochage complémentaires qui permettent de les maintenir dans une position prédéterminée.

En fait, l'une des pièces, par exemple 11, comprend deux pions de guidage et de centrage désignés par les références 11b et 11c sur ces figures, présentant des dimensions différentes et adaptés pour s'engager dans des zones correspondantes de dimensions différentes également, 10b et 10c, d'une lumière de l'autre pièce par exemple 10.

Ceci permet alors d'assurer un détrompage lors du montage des pièces l'une par rapport à l'autre, les pièces ne pouvant être associées l'une à l'autre que dans une seule orientation.

De plus, la pièce d'appui par exemple 10, comporte également sur chacun de ces bords, une partie en saillie respectivement 10d et 10e, entre lesquels s'engage l'autre pièce, par exemple 11, l'une de ces parties par exemple étant munie d'une portion en forme de crochet 10f, adaptée pour s'engager dans une échancrure complémentaire, par exemple 11d, de l'autre pièce 11, pour assurer son maintien en position et donc l'accrochage des pièces l'une sur l'autre.

Cette portion en forme de crochet 10f de la partie en saillie 10e de la pièce 10 est reliée par exemple au reste de celle-ci par des zones frangibles et peut par exemple être séparée par rupture de ces zones du reste de celle-ci une fois le montage de l'ensemble de colonne terminé, pour redonner à ces pièces une liberté de mouvement l'une par rapport à l'autre et autoriser le fonctionnement normal de l'ensemble.

On conçoit en effet que ce sous-ensemble comportant les deux pièces d'appui 10,11 et l'organe élastique 12, peut, lorsque la pièce 11 est correctement engagée dans les moyens d'accrochage complémentaires de la pièce 10, être monté directement sur l'ensemble de colonne de direction lors de l'assemblage de celui-ci.

Ces pièces étant maintenues en position prédéterminée l'une par rapport à l'autre, l'opérateur de montage n'a alors plus à se soucier de l'alignement de celles-ci.

Une fois le montage de l'ensemble de colonne terminé, cet opérateur peut alors rompre par exemple la portion en forme de crochet 10f de la partie en saillie 10e de la pièce 10, pour redonner à ces pièces leur liberté de mouvement relatif et permettre un fonctionnement normal de l'ensemble de colonne.

Ceci permet alors de simplifier le processus d'assemblage de l'ensemble de colonne et donc de gagner du temps lors de cette opération.

## Revendications

1. Ensemble de colonne de direction réglable en position notamment de véhicule automobile, du type comportant une structure de fixation (2) munie de flasques entre lesquels s'étend un corps de colonne de direction (3) dans lequel est disposé un arbre de direction (4) et un tirant (8) relié au corps de colonne (3), dont une extrémité est associée à des moyens d'appui sur l'un des flasques de la structure et l'autre, à des moyens (5) de blocage de l'ensemble de colonne par serrage des flasques autour du corps de colonne, déplaçables entre une position de verrouillage pour bloquer le corps de colonne et une position de déverrouillage pour permettre son réglage, ces moyens de blocage (5) comportant des moyens (9) d'immobilisation de sécurité du tirant (8) par rapport à la structure de fixation (2), comprenant deux pièces d'appui (10,11) en regard l'une à l'autre, entre lesquelles sont prévus des moyens élastiques d'écartement (12), dont l'une (10) est reliée au flasque correspondant (6) de la structure de fixation et dont l'autre (11) est portée par le tirant (8), les surfaces en regard de ces pièces comprenant des parties en saillie et en creux complémentaires (10a,11a) déplaçables entre une position d'engrènement lorsque les moyens de blocage (5) sont en position de verrouillage et une position escamotée permettant le déplacement de ces pièces l'une par rapport à l'autre lorsque les moyens de blocage sont en position déverrouillée, caractérisé en ce que les pièces d'appui (10,11) comprennent des moyens d'accrochage complémentaires (10d,10e,10f, 11d) de maintien de celles-ci dans une position prédéterminée l'une par rapport à l'autre, en vue du montage de l'ensemble de colonne et en ce que ces moyens d'accrochage sont débrayables après le montage de cet ensemble.

2. Ensemble selon la revendication 1, caractérisé en ce que l'une (11) des pièces d'appui comporte des pions de guidage et de centrage (11b,11c) de dimensions différentes, adaptés pour s'engager dans des portions correspondantes (10b,10c) d'une lumière de l'autre pièce (10), pour assurer un montage de ces pièces dans une orientation prédéterminée.

3. Ensemble selon la revendication 1 ou 2, caractérisé en ce-que les moyens d'accrochage complémentaires comprennent des parties en saillie (10d,10e) sur les bords de l'une des pièces (10), l'autre pièce (11) étant adaptée pour s'engager entre ces parties en saillie, l'une des parties en saillie (10e) comportant une portion en forme de crochet (10f) adaptée pour s'engager dans une échancrure (11d) de l'autre pièce pour la maintenir en position.

4. Ensemble selon la revendication 3, caractérisé en ce que la portion en forme de crochet (10f) de la partie en saillie correspondante (10e) de l'une des pièces est détachable par rupture de zone frangibles de liaison de celle-ci au reste de cette partie en saillie pour débrayer les moyens d'accrochage des pièces l'une sur l'autre.
